# EUROPEAN PATENT SPECIFICATION

(11) **EP 4 365 229 B1**
(45) Date of publication and mention of the grant of the patent: **14.10.2026**
(21) Application number: 22833203.7
(22) Date of filing: 29.06.2022
(51) Int. Cl.: C08L 7/00, C08K 3/36, C08K 5/24, C08K 5/30, C08L 9/00, B60C 1/00

(54) **RUBBER COMPOSITION AND TIRE**
KAUTSCHUKZUSAMMENSETZUNG UND REIFEN
COMPOSITION DE CAOUTCHOUC ET PNEUMATIQUE

(30) Priority: 29.06.2021 JP 2021107298
(43) Date of publication of application: 08.05.2024
(73) Proprietor: Otsuka Chemical Co., Ltd., Osaka-shi, Osaka 540-0021 (JP)
(72) Inventor: UENO, Mifuyu, Tokushima-shi, Tokushima 771-0193 (JP); OKABE, Yuki, Tokushima-shi, Tokushima 771-0193 (JP); SHINOZAKI, Shinya, Tokushima-shi, Tokushima 771-0193 (JP)
(74) Representative: Meissner Bolte Partnerschaft mbB
(86) International application number: PCT/JP2022/025932
(87) International publication number: WO 2023/277057

(56) References cited:
- JP-A- 2008 189 911
- JP-A- 2021 152 104
- JP-A- 2022 040 828
- JP-A- S5 336 539
- US-A1- 2016 017 121
- US-A1- 2020 040 167
- US-A1- 2021 108 048

## Description

### Technical Field

The present invention relates to a rubber composition and a tire.

### Background Art

With recent strict international regulations on carbon dioxide emissions, demand for lower fuel consumption in automobiles has increased. As one solution, there is demand for reduced rolling resistance of tires and increased fuel performance.

Patent Literature 1 discloses a rubber composition comprising a rubber component comprising at least one rubber selected from the group consisting of natural rubber and synthetic rubber, and at least one member selected from the group of hydrazide compounds.

Patent Literature 2 discloses a pneumatic tire formed from a rubber composition comprising at least one rubber component selected from natural rubber and diene synthetic rubber, a carbon black, and a hydrazide compound.

Patent Literature **3** discloses a pneumatic tire comprising a rubber composition comprising a diene-based rubber, a filler and a hydrazone additive based on an aryl carboxylic acid.

The conventional technique generally has a binary relationship between low heat build-up properties and processability (Mooney viscosity), and it would be difficult to improve performance of both in a balanced manner.

### Citation List

### Patent Literature

PTL 1: WO98/044040
PTL 2: JP2001-191720
PTL 3: US2021108048A1

### Summary of Invention

### Technical Problem

An object of the present invention is to provide a rubber composition with excellent low heat build-up properties.

### Solution to Problem

The inventors have conducted extensive research to achieve the above object and have found that by using the specific compound and a filler, a rubber composition that exhibits excellent low heat build-up properties can be provided.

The inventors have also found that a rubber composition that exhibits excellent processability can be provided.

Based on these findings, the inventors conducted further research and accomplished the present invention.

Specifically, the present invention provides the following rubber compositions.

### Item 1.

A rubber composition comprising
a diene rubber component,
at least one compound selected from the group consisting of a compound represented by the following formula (1), and a compound represented by the following formula (2), and
a filler, 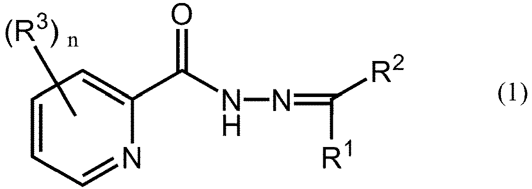 wherein, in formula (1),
R¹ and R² are identical or different and each represents a hydrogen atom or a hydrocarbon group, and the hydrocarbon group may further have any substituent;
R¹ and R² may be bonded together; and
R³s are identical or different and each represents any substituent; and
n represents an integer of 0 to 4; 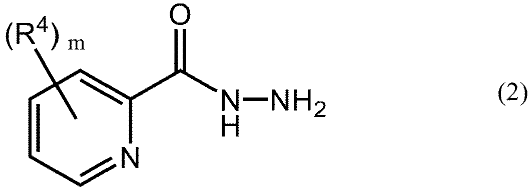 wherein, in formula (2),
R⁴s are identical or different and each represents any substituent; and
m represents an integer of 0 to 4.

### Item 2

The composition according to Item 1, wherein, in formula (1), R¹ represents a hydrogen atom or a C₁-C₄ alkyl group.

### Item 3

The composition according to Item 1 or 2, wherein, in formula (1), R² represents a C₁-C₁₈ alkyl group.

### Item 4

The composition according to any one of Items 1 to 3, wherein, in formula (1), n = 0.

### Item 5

The composition according to any one of Items 1 to 4, wherein, in formula (2), m = 0.

### Item 6

The rubber composition according to any one of Items 1 to 5, wherein the filler contains at least silica,
the rubber composition comprises silica in an amount of 5 parts by mass or more per 100 parts by mass of the diene rubber component.

### Item 7

The rubber composition according to any one of Items 1 to 6, wherein the diene rubber component contains at least natural rubber,
the rubber composition comprises natural rubber in an amount of 40 mass% or more per 100 mass% of the diene rubber component.

### Item 8

A tread for tires or a sidewall for tires produced using the rubber composition according to any one of Items 1 to 7.

### Advantageous Effects of Invention

The rubber composition of the present invention exhibits excellent low heat build-up properties.

The rubber composition of the present invention further exhibits excellent processability.

### Description of Embodiments

### 1. Rubber composition

The rubber composition of the present invention comprises
a diene rubber component,
at least one compound selected from the group consisting of a compound represented by formula (1), and a compound represented by formula (2); and
a filler.

The rubber material obtained by using the rubber composition of the present invention exhibits excellent low heat build-up properties.

The rubber material obtained by using the rubber composition of the present invention further exhibits excellent processability.

The rubber material obtained by using the rubber composition of the present invention can be preferably used for tires and the like.

### 1-1. Compound represented by formula (1)

The compound represented by formula (1) is represented by the following formula: 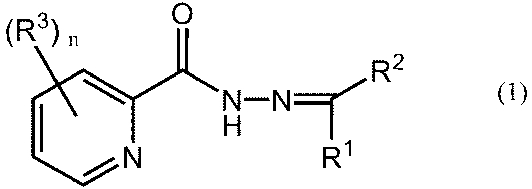
wherein, in formula (1),
R¹ and R² are identical or different, and each represents a hydrogen atom or a hydrocarbon group, and the hydrocarbon group may further have any substituent;
R¹ and R² may be bonded together; and
R³s are identical or different, and each represents any substituent, and
n represents an integer of 0 to 4.

R¹ and R² are identical or different, and each represents a hydrogen atom or a hydrocarbon group.

The hydrocarbon group is preferably an aliphatic hydrocarbon group, aromatic hydrocarbon group, etc. The aliphatic hydrocarbon group is preferably a saturated hydrocarbon group, unsaturated hydrocarbon group, etc., and is a linear, branched, or cyclic aliphatic hydrocarbon group.

R¹ and R² are each preferably a hydrogen atom or a linear, branched, or cyclic alkyl group.

When R¹ is an alkyl group, the number of carbon atoms in R¹ is preferably 1 to 4, more preferably 1 or 2, and even more preferably 1.

When R² is an alkyl group, the number of carbon atoms in R² is preferably 1 to 18, and more preferably 1 to 11.

R¹ and R² are optionally bonded together to form an alkylene group.

The hydrocarbon groups of R¹ and R² each optionally have one or more identical or different substituents.

R³ is any one or more identical or different substituents.

n represents an integer of 0 to 4.

The substituent is not particularly limited. The substituent is preferably a halogen atom, an amino group, an aminoalkyl group, an alkoxycarbonyl group, an acyl group, an acyloxy group, an amide group, a carboxyl group, a carboxyalkyl group, a formyl group, a nitrile group, a nitro group, an alkyl group, a hydroxyalkyl group, a hydroxyl group, an alkoxy group, an aryl group, an aryloxy group, a heterocyclic group, a thiol group, an alkylthio group, an arylthio group, etc.

Preferably 1 to 4, and more preferably 1 to 3 substituents may be present at a substitutable position.

The amino group is preferably an amino group represented by -NH₂.

Examples of the amino group include C₁-C₆ linear or branched monoalkylamino groups (substituted amino groups), such as methylamino, ethylamino, n-propylamino, isopropylamino, n-butylamino, isobutylamino, s-butylamino, t-butylamino, 1-ethylpropylamino, n-pentylamino, neopentylamino, n-hexylamino, isohexylamino, and 3-methylpentylamino.

The amino group is preferably a dialkylamino group (substituted amino group) having two C₁-C₆ linear or branched alkyl groups, such as dimethylamino, ethylmethylamino, and diethylamino groups.

Of these substituents, amino and hydroxyl groups are preferred, with hydroxyl groups being more preferred. The third position is particularly preferred as a substitution position.

Preferable examples of the compound represented by formula (1) include N'-(1-methylethylidene)picolinic acid hydrazide, N'-(1,3-dimethylbutylidene)picolinic acid hydrazide, N'-(1,3-dimethylbutylidene)3-hydroxypicolinic acid hydrazide, N'-(1-methyldodecylidene)picolinic acid hydrazide, N'-octylidene picolinic acid hydrazide, N'-decylidene picolinic acid hydrazide, N'-dodecylidene picolinic acid hydrazide, N'-(1,3-dimethylbutylidene)-4-chloropicolinic acid hydrazide, N'-(1,3-dimethylbutylidene)-4-methoxypicolinic acid hydrazide, N'-(1,3-dimethylbutylidene)-3-methylpicolinic acid hydrazide, N'-(1,3-dimethylbutylidene)-3-hydroxypicolinic acid hydrazide, or the likes.

From the viewpoint of processability, the preferred embodiment of the present invention is a compound in which n = 0 in formula (1).

A more preferred compound is N'-(1,3-dimethylbutylidene)picolinic acid hydrazide.

### 1-2. Compound represented by formula (2)

The compound represented by formula (2) is represented by the following structural formula: 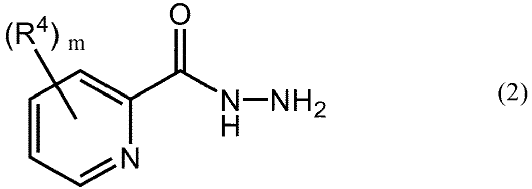
wherein, in formula (2),
R⁴s are identical or different, and each represents any substituent, and
m represents an integer of 0 to 4.
R⁴ is any one or more identical or different substituents.
m represents an integer of 0 to 4.

The substituent is not particularly limited. Preferable examples of the substituent include a halogen atom, an amino group, an aminoalkyl group, an alkoxycarbonyl group, an acyl group, an acyloxy group, an amide group, a carboxyl group, a carboxyalkyl group, a formyl group, a nitrile group, a nitro group, an alkyl group, a hydroxyalkyl group, a hydroxyl group, an alkoxy group, an aryl group, an aryloxy group, a heterocyclic group, a thiol group, an alkylthio group, an arylthio group, etc.

Preferably 1 to 4, and more preferably 1 to 3 substituents may be present at a substitutable position.

The amino group is preferably an amino group represented by -NH₂.

The amino group is preferably a C₁-C₆ linear or branched monoalkylamino group (substituted amino group), such as a methylamino group, an ethylamino group, an n-propylamino group, an isopropylamino group, an n-butylamino group, an isobutylamino group, an s-butylamino group, a t-butylamino group, a 1-ethylpropylamino group, an n-pentylamino group, a neopentylamino group, an n-hexylamino group, an isohexylamino group, or a 3-methylpentylamino group.

The amino group is preferably a dialkylamino group (substituted amino group) having two C₁-C₆ linear or branched alkyl groups, such as dimethylamino, ethylmethylamino, and diethylamino groups.

Of these substituents, amino and hydroxyl groups are preferred, with hydroxyl groups being more preferred. The third position is particularly preferred as a substitution position.

The compound represented by formula (2) is preferably picolinic acid hydrazide, 3-hydroxypicolinic acid hydrazide, 4-hydroxypicolinic acid hydrazide, 5-hydroxypicolinic acid hydrazide, 6-hydroxypicolinic acid hydrazide, 3-aminopicolinic acid hydrazide, 4-aminopicolinic acid hydrazide, 5-aminopycolinic acid hydrazide, 6-aminopycolinic acid hydrazide, or the like.

In a preferable embodiment of the present invention, the compound in formula (2) is picolinic acid hydrazide (compound wherein m=0) from the view point of processability.

### 1-3. Diene rubber component

The rubber composition of the present invention contains a diene rubber component.

The diene rubber component is preferably a natural rubber (NR), a synthetic diene rubber, a mixture of natural rubber and synthetic diene rubber, etc.

From the viewpoint of improving the durability of the rubber composition, the diene rubber is preferably a natural rubber. The natural rubber is preferably contained in an amount of 40 mass% or more, more preferably 50 mass% or more, still more preferably 60 mass% or more, and particularly preferably 70 to 100 mass% per 100 mass% of the diene rubber component.

Examples of natural rubbers include natural rubber latex, technically specified rubber (TSR), smoked sheet (RSS), gutta-percha, natural rubber from *Eucommia ulmoides,* natural rubber from guayule, natural rubber from Russian dandelion, and the like. Further, it is also preferable to use modified natural rubbers obtained by modifying these natural rubbers, such as epoxidized natural rubber, methacrylic acid-modified natural rubber, and styrene-modified natural rubber.

Examples of synthetic diene rubbers include styrenebutadiene copolymer rubber (SBR), butadiene rubber (BR), isoprene rubber (IR), nitrile rubber (NBR), chloroprene rubber (CR), ethylene-propylene-diene terpolymer rubber (EPDM), styreneisoprene-styrene triblock copolymer (SIS), styrene-butadienestyrene triblock copolymer (SBS), and the like; and modified synthetic diene rubbers thereof.

Preferable examples of modified synthetic diene rubbers include diene rubbers modified by main-chain modification, single-end modification, both-end modification, or the like.

Preferable examples of modified functional groups of modified synthetic diene rubbers include epoxy, amino, alkoxy, hydroxyl, and like functional groups containing a hetero atom. Modified synthetic diene rubbers preferably contain one or more of these functional groups.

The cis/trans/vinyl ratio of the diene moiety is not particularly limited, and any ratio is preferable.

The average molecular weight and molecular weight distribution of the diene rubber are not particularly limited. The average molecular weight is preferably 150000 to 1400000.

The production method of synthetic diene rubbers is not particularly limited, and examples include emulsion polymerization, solution polymerization, radical polymerization, anionic polymerization, cationic polymerization, and the like.

The synthetic diene rubber is preferably IR, SBR, BR, or a mixture of two or more of these rubbers. More preferably, the synthetic diene rubber is SBR, BR, or a mixture of two or more of these rubbers. The synthetic diene rubber is particularly preferably a diene rubber containing a structure in which 1,3-butadiene is polymerized.

The glass transition point of the synthetic diene rubber (preferably a diene rubber containing a structure in which 1,3-butadiene is polymerized) is preferably in the range of -110°C to -20°C, more preferably in the range of -70°C to -20°C, in terms of both wear resistance and braking properties.

The rubber composition of the present invention preferably contains 10 mass% to 60 mass%, more preferably 50 mass% to 60 mass% in the diene rubber, and the glass transition point is preferably in the range of -110°C to -20°C (more preferably in the range of -70°C to -20°C).

The proportion of at least one compound selected from the group consisting of the compound represented by formula (1) and the compound represented by formula (2) to the diene rubber component is preferably 0.1 to 50 parts by mass, more preferably 0.1 to 10 parts by mass, even more preferably 0.15 to 5 parts by mass, and particularly preferably 0.2 to 4 parts by mass, per 100 parts by mass of the diene rubber component.

A preferred embodiment of the present invention is a rubber composition in which the diene rubber component contains at least natural rubber, and the natural rubber is contained in an amount of 40 mass% or more per 100 mass% of the diene rubber component.

By setting the ratio of at least one compound selected from the group consisting of the compound represented by formula (1) and the compound represented by formula (2) based on the diene rubber component to the above ratio, excellent low heat build-up properties can be provided. Further, containing at least one compound in the above ratio can provide excellent processability.

### 1-4. Filler

The rubber composition of the present invention comprises a filler (reinforcing material).

As a filler, a conventionally known filler used in the rubber industry is used.

The filler is preferably an inorganic filler, such as silica and carbon black. More preferably, as the filler, silica is preferably used for the purpose of improving the effects of low heat build-up properties.

The inorganic filler is preferably an inorganic compound usually used in the rubber industry.

Preferable examples of the inorganic compound include silica, and aluminas (Al₂O₃), such as γ-alumina and α-alumina.

Preferable examples of the inorganic compound include alumina monohydrates (Al₂O₃·H₂O), such as boehmite and diaspore.

The inorganic compound is preferably an aluminum hydroxide [Al(OH)₃], such as gibbsite and bayerite.

The inorganic compound is preferably an aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], magnesium aluminum oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂·SiO₄ etc.), aluminum calcium silicate (Al₂O₃·CaO·2SiO₂ etc.), magnesium calcium silicate (CaMgSiO₄), calcium carbonate (CaCO₃), zirconium oxide (ZrO₂), zirconium hydroxide [ZrO(OH)₂·ₙH₂O], zirconium carbonate [Zr(CO₃)₂], and crystalline aluminosilicate containing hydrogen, alkali metal, or alkaline earth metal that compensates charge, such as various types of zeolites.

To enhance affinity to the rubber component, the surface of the inorganic filler is preferably treated with an organic compound.

The inorganic filler is preferably silica from the viewpoint of braking characteristics.

The BET specific surface area of silica is not particularly limited and may be, for example, in the range of 40 to 350 m²/g. Silica that has a BET specific surface area within this range is advantageous in that rubber reinforcement and dispersibility in the rubber component can both be achieved.

The BET specific surface area is measured according to ISO 5794/1.

Preferred is silica having a BET specific surface area of 40 to 350 m²/g, more preferred is silica having a BET specific surface area of 100 to 270 m²/g, and particularly preferred is silica having a BET specific surface area of 110 to 270 m²/g.

Examples of commercially available products of silica include products under the trade names of HD165MP (BET specific surface area: 165 m²/g), HD115MP (BET specific surface area: 115 m²/g), HD200MP (BET specific surface area: 200 m²/g), and HD250MP (BET specific surface area: 250 m²/g), all produced by Quechen Silicon Chemical Co., Ltd.; Nipsil AQ (BET specific surface area: 205 m²/g) and Nipsil KQ (BET specific surface area: 240 m²/g), both produced by Tosoh Silica Corporation; Ultrasil VN3 (BET specific surface area: 175 m²/g) produced by Degussa AG; and the like.

Examples of carbon black include, but are not particularly limited to, commercially available carbon blacks, carbon-silica dual-phase fillers, and the like.

Specific examples of carbon blacks include high-, middle- or low-structure SAF, ISAF, IISAF, N110, N134, N220, N234, N330, N339, N375, N550, HAF, FEF, GPF, or SRF-grade carbon black, and the like.

The carbon black is preferably SAF, ISAF, IISAF, N134, N234, N330, N339, N375, HAF, or FEF-grade carbon black.

There is no particular limitation on the DBP absorption of the carbon black. The carbon black preferably has a DBP absorption of 60 to 200 cm³/100 g, more preferably 70 to 180 cm³/100 g, and particularly preferably 80 to 160 cm³/100 g.

The carbon black preferably has a nitrogen adsorption specific surface area (N2SA, measured according to JIS K6217-2: 2001) of 30 to 200 m²/g. The nitrogen adsorption specific surface area of the carbon black is more preferably 40 to 180 m²/g, and still more preferably 50 to 160 m²/g.

The amount of the filler is preferably 30 to 120 parts by mass, more preferably 30 to 100 parts by mass, and even more preferably 40 to 90 parts by mass, per 100 parts by mass of the diene rubber component.

When silica is used as a filler, the amount of silica is preferably 5 to 120 parts by mass, more preferably 5 to 100 parts by mass, even more preferably 10 to 90 parts by mass, particularly preferably 10 to 50 parts by mass, and most preferably 10 to 30 parts by mass, per 100 parts by mass of the diene rubber component.

A preferable embodiment of the present invention is a rubber composition wherein the filler comprises at least one silica, and the silica is contained in an amount of 5 parts by mass or more per 100 parts by mass of the diene rubber component.

### 1-5. Other components

In addition to the compound, rubber components, and filler, the rubber composition of the present invention preferably comprises components usually used in the rubber industry.

The rubber composition of the present invention may further comprise other components, such as antioxidants, ozone protectants, softeners, processing aids, waxes, resins, foaming agents, oils, stearic acid, zinc oxide (ZnO), vulcanization accelerators, vulcanization retarders, and vulcanizing agents including sulfur. These components may be suitably selected and incorporated.

Further, a silane coupling agent is preferably incorporated into the rubber composition that comprises a filler, such as silica, for the purpose of enhancing the rubber composition reinforcement by silica, or enhancing abrasion resistance while reducing heat build-up properties of the rubber composition.

The silane coupling agent that can be used with silica is not particularly limited, and commercially available products can be suitably used.

Examples of such silane coupling agents include sulfide, polysulfide, thioester, thiol, olefin, epoxy, amino, and alkyl silane coupling agents.

Preferable examples of sulfide silane coupling agents include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, bis(2-monoethoxydimethylsilylethyl)disulfide, and the like.

The sulfide silane coupling agent is more preferably bis(3-triethoxysilylpropyl)tetrasulfide.

Preferable examples of thioester silane coupling agents include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, and the like.

Preferable examples of thiol silane coupling agents include 3-mercaptopropyltrimethoxysilane, 3-mercaptopropyltriethoxysilane, 3-mercaptopropylmethyldimethoxysilane, 3-[ethoxybis(3,6,9,12,15-pentaoxaoctacosan-1-yloxy)silyl]-1-propanethiol, and the like.

Preferable examples of olefin silane coupling agents include dimethoxymethylvinylsilane, vinyltrimethoxysilane, dimethylethoxyvinylsilane, diethoxymethylvinylsilane, triethoxyvinylsilane, vinyltris(2-methoxyethoxy)silane, allyltrimethoxysilane, allyltriethoxysilane, p-styryltrimethoxysilane, 3-(dimethoxymethylsilyl)propyl acrylate, 3-(trimethoxysilyl)propyl acrylate, 3-[dimethoxy(methyl)silyl]propyl methacrylate, 3-(trimethoxysilyl)propyl methacrylate, 3-[dimethoxy(methyl)silyl]propyl methacrylate, 3-(triethoxysilyl)propyl methacrylate, 3-[tris(trimethylsiloxy)silyl]propyl methacrylate, and the like.

Preferable examples of epoxy silane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, 2-(3,4-epoxycyclohexyl)ethyltrimethoxysilane, and the like.

The epoxy silane coupling agent is preferably 3-glycidyloxypropyltrimethoxysilane.

Preferable examples of amino silane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane, and the like.

The amino silane coupling agent is preferably 3-aminopropyltriethoxysilane.

Preferable examples of alkyl silane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, n-decyltrimethoxysilane, and the like.

The alkyl silane coupling agent is preferably methyltriethoxysilane.

The silane coupling agent is more preferably bis (3-triethoxysilylpropyl)tetrasulfide, bis (3-triethoxysilylpropyl) disulfide, and 3-[ethoxybis(3,6,9,12,15-pentaoxaoctacosan-1-yloxy)silyl]-1-propanethiol.

The silane coupling agents may be used singly or in a combination of two or more.

The amount of the silane coupling agent is preferably 2 to 20 parts by mass, and more preferably 3 to 15 parts by mass, per 100 parts by mass of silica.

By setting the amount of the silane coupling agent to 2 parts by mass or more per 100 parts by mass of silica, the rubber composition can more preferably exhibit the effect of low heat build-up properties. By setting the amount of the silane coupling agent to 20 parts by mass or less per 100 parts by mass of silica, the cost of the rubber composition can be reduced to improve economic efficiency.

### 2. Tire

By manufacturing tires using the rubber composition of the present invention, it is possible to obtain tires with excellent mechanical characteristics, particularly high tear strength. The tires of the present invention can be produced by a known method, except that the rubber composition of the present invention is used.

The tire is preferably for trucks, buses, heavy-duty tires, and winter tires.

In the tire of the present invention, the above rubber composition is used preferably for at least one member selected from tread, sidewall, bead area, belt, carcass, and shoulder portions.

In the tire (pneumatic tire) of the present invention, members such as the tread, sidewall, and other portions are formed by the rubber composition of the present invention.

The "tread" is a portion that has a tread pattern and comes into direct contact with the road surface. The tire tread refers to a tire casing portion for protecting the carcass and preventing wear and flaws, and refers to a cap tread that constitutes the grounding part of a tire and/or to a base tread that is disposed inside the cap tread.

In the tire of the present invention, the above rubber composition is used particularly preferably for a tread portion.

The "sidewall" portions refers to a portion from the lower side of a shoulder portion to a bead portion of a pneumatic radial-ply tire. The sidewall portions protect the carcass and are bent the most when the vehicle drives.

In the tire of the present invention, the rubber composition is particularly preferably used for a sidewall portion.

The "bead area" portions function to anchor both ends of carcass cords and simultaneously hold the tire to the rim. Beads are composed of bundles of high-carbon steel.

The "belt" refers to a reinforcing band disposed between the carcass and the tread of a radial structure in the circumferential direction. The belt tightens the carcass like a hoop of a barrel to enhance the rigidity of the tread.

The "carcass" refers to a cord layer portion that forms the framework of the tire. The carcass plays a role in bearing the load, impact, and filled air pressure applied to the tire.

The "shoulder" refers to a shoulder portion of the tire. Shoulder portions play a role in protecting the carcass.

The tire of the present invention can be preferably produced by methods known in the field of tires.

The tire may be preferably filled with ordinary air, or air having an adjusted oxygen partial pressure; or an inert gas, such as nitrogen, argon, or helium.

A preferred form of the present invention is a tread for tires or a sidewall for tires using the rubber composition.

### 3. Method for producing rubber composition

The method for producing the rubber composition of the present invention is not particularly limited, and preferably involves mixing the compound, rubber component, filler, and if necessary, other components. The compound can be produced by a known method.

The mixing method is not particularly limited, and preferably a known method is used. The compound and optionally other components are preferably kneaded using a kneading machine or the like.

The embodiments of the present invention are described above; however, the present invention is not limited to these examples.

### Examples

The embodiments of the present invention are described below more specifically with reference to Production Examples and Examples.

The present invention is not limited to the Examples.

### Production Example 1: Production of picolinic acid hydrazide (compound a)

9.71 g of hydrazine monohydrate was added to 25.3 g of methyl picolinate and 20 mL of methanol, followed by heating under reflux for 18 hours. After the reaction solution was cooled to room temperature and filtered, the obtained solid was crushed and washed in 20 mL of isopropyl alcohol, and dried under reduced pressure to obtain 22.9 g of a desired product (yield: 90%).

### Melting point: 100°C

1H-NMR (500 MHz, DMSO-d6, δ ppm): 4.57 (s, 2H), 7.58 (m, 1H), 7.99 (m, 2H), 8.62 (m, 1H), 9.87 (s, 1H)

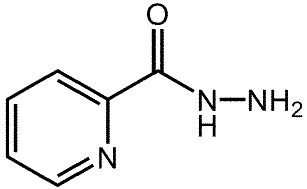

### Production Example 2: Production of N'-(1,3-dimethylbutylidene)picolinic acid hydrazide (compound b)

14.6 g of methyl isobutyl ketone was added to 10 g of picolinic acid hydrazide and 20 mL of methanol, followed by heating under reflux for 18 hours. The solvent was distilled off under reduced pressure, and 20 mL of isopropyl alcohol was added to the obtained residue, followed by stirring under ice-cold conditions, thus precipitating a crystal. The crystal was filtered, washed with an isopropyl alcohol, and then the obtained solid was dried under reduced pressure to obtain 15.6 g of a desired product (yield: 98%).

### Melting point: 84°C

1H-NMR (400 MHz, DMSO-d6, δppm): 0.91-0.96 (m, 6H), 1.97-2.04 (m, 4H), 2.21-2.29 (m, 2H), 7.64-7.67 (m, 1H), 8.03-8.11 (m, 2H), 8.68-8.69 (m, 1H), 10.75-10.85 (m, 1H)

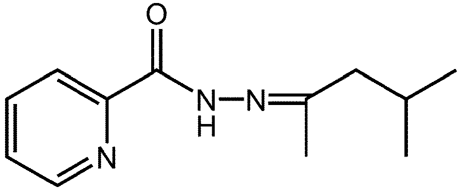

### Production Example 3: Production of 3-hydroxypicolinic acid hydrazide (compound c)

2.8 g of concentrated sulfuric acid was added to 75 mL of methanol containing 5.00 g of 3-hydroxypicolinic acid, followed by heating under reflux for 36 hours. The solvent was distilled off under reduced pressure, and the pH was adjusted to 8 by adding the obtained residue to a potassium carbonate solution under ice cooling. The product was extracted with dichloromethane and dried over sodium sulfate, and then the solvent was distilled off under reduced pressure to obtain 4.36 g of methyl ester (yield: 74%).

2.13 g of hydrazine monohydrate was added to 40 mL of methanol containing 4.31 g of the obtained methyl ester, followed by stirring at 50°C for 18 hours. The solvent was distilled off under reduced pressure, and a small amount of methanol was added to the obtained residue, followed by stirring to obtain a crystal. The crystal was filtered, washed with methanol, and the obtained solid was dried under reduced pressure to obtain 3.17 g of a desired product (yield: 74%).

### Melting point: 143°C

1H-NMR (400 MHz, DMSO-d6, δppm): 4.70 (br-s, 2H), 7.38-7.42 (m, 1H), 7.47-7.50 (m, 1H), 8.11-8.13 (m, 1H), 10.61 (br-s, 1H)

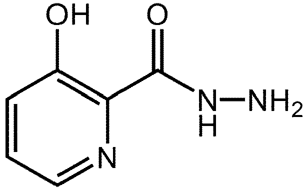

### Production Example 4: Production of N'-(1,3-dimethylbutylidene)3-hydroxypicolinic acid hydrazide (compound d)

8.00 g of methyl isobutyl ketone was added to 40 mL of methanol containing 3.10 g of 3-hydroxypicolinic acid hydrazide, followed by heating under reflux for 18 hours. The solvent was distilled off under reduced pressure, and 20 mL of hexane was added to the obtained residue, followed by stirring, thus precipitating a crystal. The crystal was filtered, washed with hexane, and then the obtained solid was dried under reduced pressure to obtain 5.80 g of a desired product (yield: 92%).

### Melting point: 93°C

1H-NMR (400 MHz, DMSO-d6, δppm): 0.91-0.94 (m, 6H), 1.96-2.04 (m, 4H), 2.05-2.26 (m, 2H), 7.46-7.48 (m, 1H), 7.55-7.59 (m, 1H), 8.20-8.21 (m, 1H), 10.92(s, 1H)

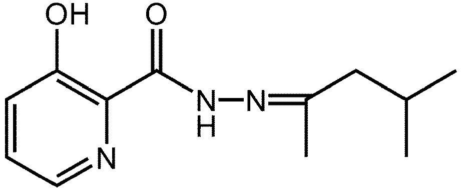

### Production Example 5: Production of nicotinic acid hydrazide (Compound e)

5.50 g of hydrazine monohydrate was added to 13.7 g of methyl nicotinate and 26 mL of isopropyl alcohol, followed by heating under reflux for 18 hours. The reaction solution was cooled to room temperature and filtered. The obtained solid was crushed and washed with 20 mL of isopropyl alcohol, followed by drying under reduced pressure to obtain 12.2 g (yield: 88%) of a desired product.

### Melting point: 162°C

1H-NMR (400 MHz, DMSO-d6, δppm): 4.57 (s, 2H), 7.50 (m, 1H), 8.15 (m, 1H), 8.70 (m, 1H), 8.97 (m, 1H), 9.97 (s, 1H)

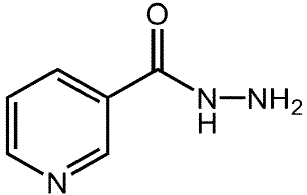

### Production Example 6: Production of N'-(1,3-dimethylbutylidene)nicotinic acid hydrazide (compound f)

14.6 g of methyl isobutyl ketone was added to 10 g of nicotinic acid hydrazide and 100 mL of methanol, followed by heating under reflux for 18 hours. The solvent was distilled off under reduced pressure, and 50 mL of hexane was added to the obtained residue, followed by stirring. The supernatant hexane layer was removed, and then another 50 mL of hexane was added, followed by stirring, thus precipitating a crystal. The crystal was filtered, washed with hexane, and the obtained solid was dried under reduced pressure to obtain 15.3 g of a desired product (yield: 96%).

### Melting point: 72°C

1H-NMR (400 MHz, DMSO-d6, δppm): 0.92(d, 6H), 1.94 (s, 3H), 1.96-2.00 (m, 1H), 2.18 (d, 2H), 7.52 (dd, 1H), 8.17 (d, 1H), 8.72 (d, 1H), 8.98 (s, 1H), 10.63 (s, 1H)

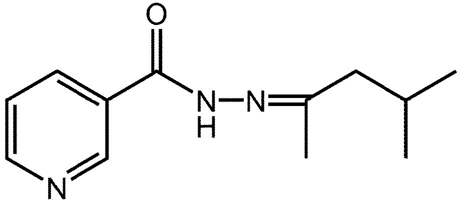

### Production Example 7: Production of N'-(1,3-dimethylbutylidene)isonicotinic acid hydrazide (compound h)

14.6 g methyl isobutyl ketone was added to 10 g isonicotinic acid hydrazide and 100 mL of methanol, followed by heating under reflux for 18 hours. The solvent was distilled off under reduced pressure, and 100 mL of hexane was added to the obtained residue, thus precipitating a crystal. The crystal was filtered, washed with hexane, and then the obtained solid was dried under reduced pressure to obtain 15.8 g of a desired product (yield: 97%) .

### Melting point: 96°C

1H-NMR (400 MHz, DMSO-d6, δppm): 0.82-0.91 (m, 6H), 1.91-2.50 (m, 6H), 7.50-7.74 (m, 2H), 8.63-8.72 (m, 2H), 10.69 (s, 1H)

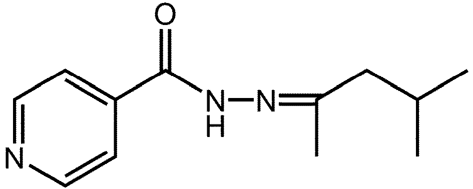

### Examples 1 to 8 and Comparative Examples 1 to 12: Production of rubber composition

The components listed in step (I) in Table 1 were mixed in the proportions (mass parts), and kneaded in a Banbury mixer.

After the mixture was allowed to rest until the temperature of the mixture was reduced to 80°C or less, the components shown in step (II) in Table 1 were introduced in the proportions (mass parts) and kneaded by adjusting the maximum temperature of the mixture to 110°C or less, thus producing unvulcanized rubber compositions.

The obtained unvulcanized rubber compositions were heated at 150°C for 25 minutes using a vulcanizing press to obtain rubber compositions.

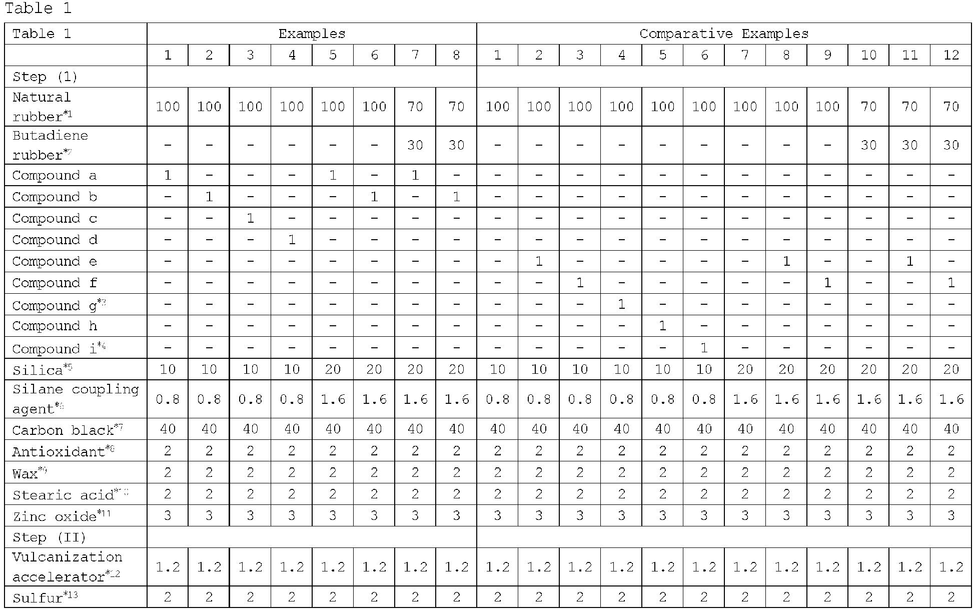

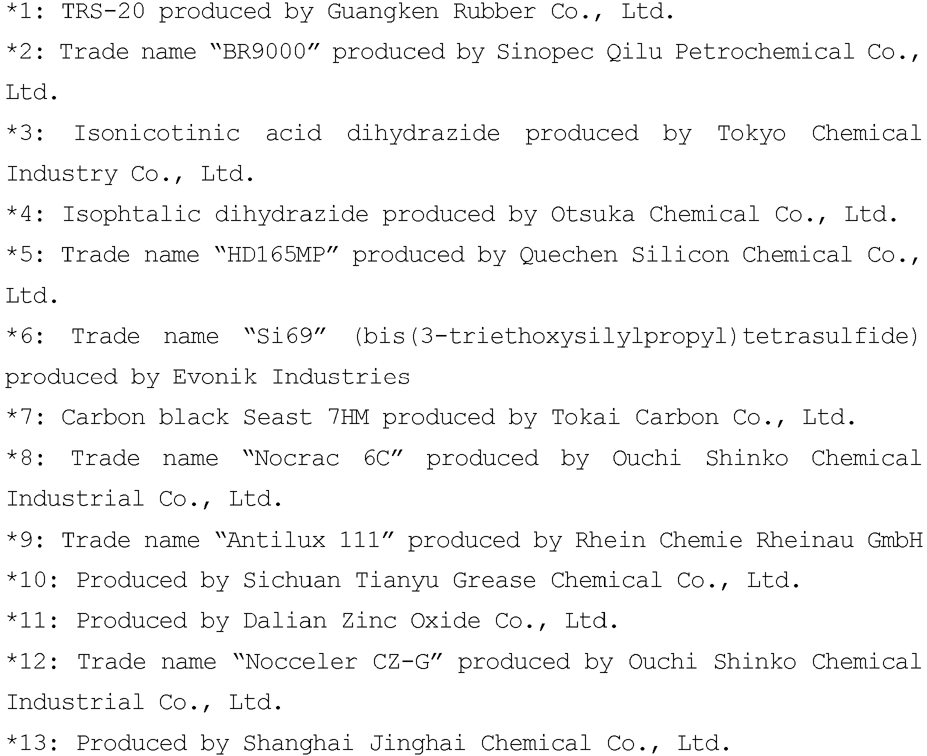

### Low heat build-up properties (tan δ index) test

The tan δ of rubber compositions obtained in the Examples and Comparative Examples was measured using a viscoelasticity measuring instrument (produced by Metravib) at a temperature of 25°C, a dynamic strain of 5%, and a frequency of 15 Hz. For comparison, the rubber composition (Comparative Examples 1, 7, and 10) was prepared using the same components and the same production method as in the Examples except that no compound was added. The tan δ of the composition was defined as 100. The low heat build-up index was calculated according to the following formula.

A smaller low heat build-up index value indicates smaller heat build-up properties and smaller hysteresis loss. Formula: $\begin{matrix}Low heat build - up index \\ = \left(\begin{matrix}Tan δ of the rubber composition of each of Examples 1 and 4 and \\ Comparative Examples 2 and 6\end{matrix}\right) \times 100 / \left(\begin{matrix}Tan δ of Comparative \\ Example 1\end{matrix}\right)\end{matrix}$ Formula: $\begin{matrix}Low heat build - up index \\ = \left(\begin{matrix}Tan δ of the rubber composition of each of Examples 5 and 6 and \\ Comparative Examples 8 and 9\end{matrix}\right) \times 100 / \left(\begin{matrix}Tan δ of Comparative Example \\ 7\end{matrix}\right)\end{matrix}$ Formula : $\begin{matrix}Low heat build - up index \\ = \left(\begin{matrix}Tan δ of the rubber composition of each of Examples 7 and 8 and \\ Comparative Examples 11 and 12\end{matrix}\right) \times 100 / \left(\begin{matrix}Tan δ of Comparative \\ Example 10\end{matrix}\right)\end{matrix}$

The results are shown in Table 2.

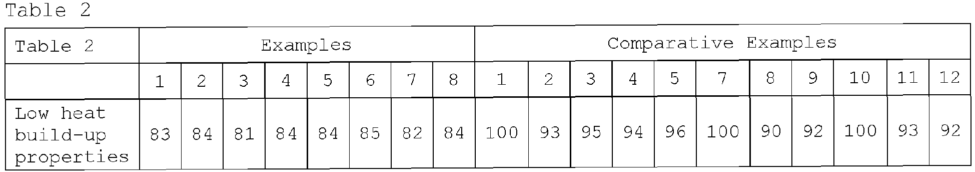

### Mooney viscosity measurement (processability)

The Mooney viscosity was measured in accordance with JIS K6300-1 (Determination of viscosity and scorch time according to Mooney viscometer; ML1+4, 100°C). For comparison, a rubber composition (Comparative Example 1) was produced using the same formulation and production method as in the Examples, except that the compound was not added, and the Mooney viscosity value was defined as an index of 100. The processability index was calculated according to the following formula.

A higher processability index value indicates better processability.
Formula: $\begin{matrix}Processability index \\ = \left(\begin{matrix}Mooney viscosity of the rubber compositions of Examples 1 and \\ 2 and Comparative Example 6\end{matrix}\right) \times 100 / \left(\begin{matrix}Mooney viscosity of \\ Comparative Example 1\end{matrix}\right)\end{matrix}$

Table 3 shows the results.

**Table 3**

| Table 3 | Examples | | Comparative Example |
|---|---|---|---|
| | 1 | 2 | 6 |
| Processability index | 98 | 90 | 191 |

### Industrial Applicability

Since the rubber composition of the present invention is obtained by preparing a rubber material in which a rubber component contains a filler and at least one compound selected from the group consisting of a compound represented by formula (1) and a compound represented by formula (2), excellent low heat build-up properties can be attained even though the rubber composition comprises an additive containing at least one compound selected from the group consisting of the compound represented by formula (1) and the compound represented by formula (2).

The rubber composition of the present invention further exhibits excellent processability.

The rubber composition of the present invention can be preferably used for tires, particularly for treads for tires or sidewalls for tires.

## Claims

1. A rubber composition comprising
a diene rubber component,
at least one compound selected from the group consisting of a compound represented by the following formula (1), and a compound represented by the following formula (2), and
a filler, 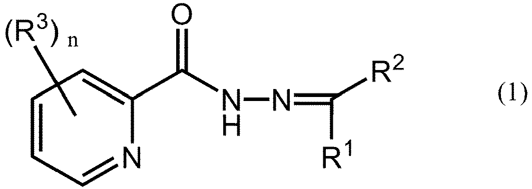
wherein, in formula (1),
R¹ and R² are identical or different and each represents a hydrogen atom or a hydrocarbon group, and the hydrocarbon group may further have any substituent;
R¹ and R² may be bonded together; and
R³s are identical or different and each represents any substituent; and
n represents an integer of 0 to 4; 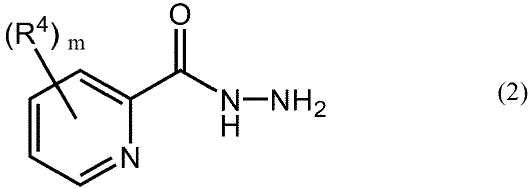
wherein, in formula (2),
R⁴s are identical or different and each represents any substituent; and
m represents an integer of 0 to 4.

2. The composition according to claim 1, wherein, in formula (1), R¹ represents a hydrogen atom or a C₁-C₄ alkyl group.

3. The composition according to claim 1 or 2, wherein, in formula (1), R² represents a C₁-C₁₈ alkyl group.

4. The composition according to any one of claims 1 to 3, wherein, in formula (1), n = 0.

5. The composition according to any one of claims 1 to 4, wherein, in formula (2), m = 0.

6. The rubber composition according to any one of claims 1 to 5, wherein the filler contains at least silica,
the rubber composition comprises silica in an amount of 5 parts by mass or more per 100 parts by mass of the diene rubber component.

7. The rubber composition according to any one of claims 1 to 6, wherein the diene rubber component contains at least natural rubber,
the rubber composition comprises natural rubber in an amount of 40 mass% or more per 100 mass% of the diene rubber component.

8. A tread for tires or a sidewall for tires produced using the rubber composition according to any one of claims 1 to 7.

## Patentansprüche

1. Kautschukzusammensetzung, umfassend
eine Dienkautschukkomponente,
wenigstens eine Verbindung, ausgewählt aus der Gruppe, bestehend aus einer durch die folgende Formel (1) dargestellten Verbindung und einer durch die folgende Formel (2) dargestellten Verbindung, und einen Füllstoff, 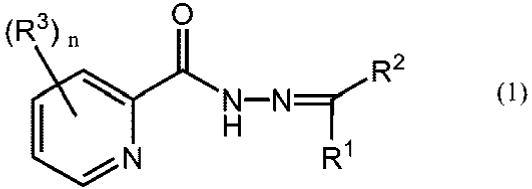
wobei in Formel (1)
R¹ und R² gleich oder verschieden sind und jeweils für ein Wasserstoffatom oder eine Kohlenwasserstoffgruppe stehen, und wobei die Kohlenwasserstoffgruppe zusätzlich einen beliebigen Substituenten aufweisen kann;
R¹ und R² miteinander verbunden sein können; und
R³ gleich oder verschieden sind und jeweils für einen beliebigen Substituenten stehen; und
n für eine ganze Zahl von 0 bis 4 steht; 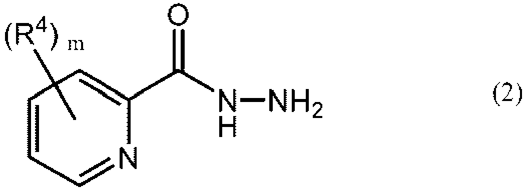
wobei in Formel (2)
R⁴ gleich oder verschieden sind und jeweils für einen beliebigen Substituenten stehen; und
m für eine ganze Zahl von 0 bis 4 steht.

2. Zusammensetzung nach Anspruch 1, wobei in Formel (1) R¹ für ein Wasserstoffatom oder eine C₁-C₄-Alkylgruppe steht.

3. Zusammensetzung nach Anspruch 1 oder 2, wobei in Formel (1) R² für eine C₁-C₁₈-Alkylgruppe steht.

4. Zusammensetzung nach einem der Ansprüche 1 bis 3, wobei in Formel (1) n = 0.

5. Zusammensetzung nach einem der Ansprüche 1 bis 4, wobei in Formel (2) m = 0.

6. Kautschukzusammensetzung nach einem der Ansprüche 1 bis 5, wobei der Füllstoff wenigstens Siliciumdioxid enthält,
die Kautschukzusammensetzung Siliciumdioxid in einer Menge von 5 Masseteilen oder mehr pro 100 Masseteile der Dienkautschukkomponente umfasst.

7. Kautschukzusammensetzung nach einem der Ansprüche 1 bis 6, wobei die Dienkautschukkomponente wenigstens Naturkautschuk enthält,
die Kautschukzusammensetzung Naturkautschuk in einer Menge von 40 Massenprozent oder mehr pro 100 Massenprozent der Dienkautschukkomponente umfasst.

8. Eine Lauffläche für Reifen oder eine Seitenwand für Reifen, hergestellt unter Verwendung der Kautschukzusammensetzung nach einem der Ansprüche 1 bis 7.

## Revendications

1. Composition de caoutchouc comprenant :
un composant caoutchouc diénique,
au moins un composé sélectionné dans le groupe consistant en un composé représenté par la formule (1) suivante, et un composé représenté par la formule (2) suivante, et
une charge, 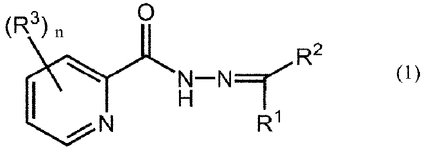
dans laquelle, dans la formule (1),
R¹ et R² sont identiques ou différents et chacun représente un atome d'hydrogène ou un groupe hydrocarboné, et le groupe hydrocarboné peut en outre présenter n'importe quel substituant ;
R¹ et R² peuvent être liés l'un à l'autre ; et
les R³ sont identiques ou différents et chacun représente un substituant quelconque ; et
n représente un entier de 0 à 4 ; 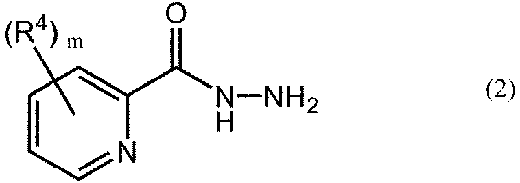
dans laquelle, dans la formule (2),
les R⁴ sont identiques ou différents et chacun représente un substituant quelconque ; et
m représente un entier de 0 à 4.

2. Composition selon la revendication 1, dans laquelle, dans la formule (1), R¹ représente un atome d'hydrogène ou un groupe alkyle en C₁-C₄.

3. Composition selon la revendication 1 ou 2, dans laquelle, dans la formule (1), R² représente un groupe alkyle en C₁-C₁₈.

4. Composition selon l'une quelconque des revendications 1 à 3, dans laquelle, dans la formule (1), n = 0.

5. Composition selon l'une quelconque des revendications 1 à 4, dans laquelle, dans la formule (2), m = 0.

6. Composition de caoutchouc selon l'une quelconque des revendications 1 à 5, dans laquelle la charge contient au moins de la silice,
la composition de caoutchouc comprend de la silice en une quantité supérieure ou égale à 5 parties en masse pour 100 parties en masse du composant caoutchouc diénique.

7. Composition de caoutchouc selon l'une quelconque des revendications 1 à 6, dans laquelle le composant caoutchouc diénique contient au moins du caoutchouc naturel,
la composition de caoutchouc comprend du caoutchouc naturel en une quantité supérieure ou égale à 40 % en masse pour 100 % en masse du composant caoutchouc diénique.

8. Bande de roulement pour pneumatiques ou flanc pour pneumatiques produit à partir de la composition de caoutchouc selon l'une quelconque des revendications 1 à 7.
